# EUROPEAN PATENT SPECIFICATION

(11) **EP 0 917 343 B1**
(45) Date of publication and mention of the grant of the patent: **20.08.2003**
(21) Application number: 98309290.9
(22) Date of filing: 13.11.1998
(51) Int. Cl.: H04N 1/047

(54) **Correcting image errors in a shuttle scanner**
Bildfehlerkorrektur in Pendelabtaster
Correction d'erreurs d'image dans un balayeur va et vient

(30) Priority: 13.11.1997 KR 9759620
(43) Date of publication of application: 19.05.1999
(73) Proprietor: Samsung Electronics Co. Ltd, Suwon City Kyongki-do (KR)
(72) Inventor: Ryu, Yeong-Eek, Euiwang, Kyonggi-do (KR)
(74) Representative: Tunstall, Christopher Stephen

(56) References cited:
- EP-A- 0 257 570
- EP-A- 0 497 440
- EP-A- 0 735 738
- NL-A- 8 603 173
- US-A- 5 642 202
- PATENT ABSTRACTS OF JAPAN vol. 1997, no. 01, 31 January 1997 (1997-01-31) & JP 08 237446 A (RICOH CO LTD), 13 September 1996 (1996-09-13)

## Description

### BACKGROUND TO THE INVENTION

The present invention concerns the correction of image errors in a shuttle scanner that arise from the alignment tolerance of the scanner and inertia in the shuttle movement.

In a shuttle scanner, the scanning head must be moved in a direction normal to the direction in which the document to be scanned is advanced. This means that the alignment tolerance is zero. In a shuttle scanner, the scanning head moves left and right while scanning the image on a document. Image errors can occur in the scanned image arising from mechanical tolerances in the scanner.

The scanning head is mounted on a guide shaft to be guided while being reciprocated along the guide shaft. However, the scanning head may swing a little at either end of its travel, as it changes direction, thus becoming inclined relative to its ideal position, due to inertia. The scanned data may then have errors in that the image is inclined. Therefore, it is necessary to correct the image errors in the image data.

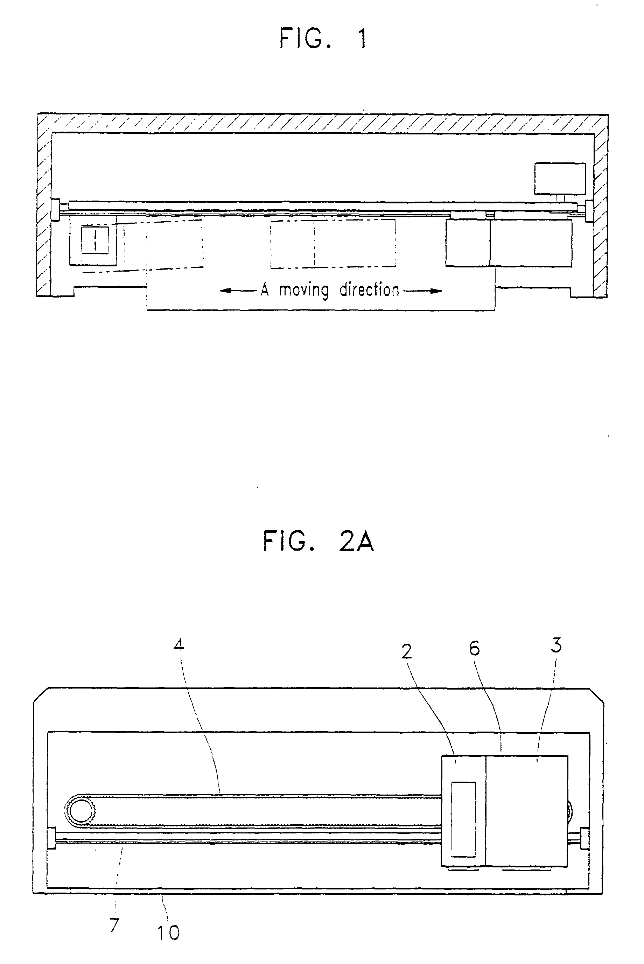

To correct the image errors, conventionally, a reference sticker having a pattern is attached at one end of the scanning area of the scanner, as shown in FIG. 1 and the scanner scans the pattern on the reference sticker, band by band, to detect errors between the first datum and the last datum of each band. The scanned image data are corrected according to the detected error.

However, as the reference sticker is attached at the end of the scanning area, to correct the image errors that occur during scanning, it is impossible to correct an error that arises from the process of attaching the reference sticker to the scanner. As a result, errors continually occur due to the reference sticker.

To prevent errors that arise from failure to attach the reference sticker properly to the scanner, precisely engineered apparatus is required to attach the reference sticker to the scanner accurately. Accordingly, the productivity of the scanner can be reduced and its manufacturing cost increased. Furthermore, the process of producing the scanner is complicated.

Also, if the reference sticker is contaminated by pollution, it is impossible to correct the image errors accurately. Thus, it is necessary to prevent the reference sticker from being contaminated.

US 5 642 202 describes a method of calibrating a printer. A master document containing test objects and locator symbols is first scanned. The scanned master document is transferred to a printer and stored. When calibration is required, the printer prints a test document in accordance with the scanned master document data. The printed test document is scanned and the data (test image data) is stored. The stored data from the scanned master document and the test image data (specifically the test objects) are compared to determine the calibration required for the printer. The locator symbols are used to ensure that a given pixel of the scanned master document corresponds exactly with a given pixel of the test image data.

### SUMMARY OF THE INVENTION

The present invention is designed to overcome these problems.

Accordingly, the present invention provides a method of correcting image errors in the output from a shuttle scanner, comprising:
printing a predetermined pattern on a record sheet by a print head;
scanning the record sheet and storing the scanned data;
comparing the stored data with pre-set reference data to determine any image errors;
scanning a document and correcting the scanned document data by an amount corresponding to the said image errors and storing the corrected document data
characterised in that when printing said predetermined pattern said print head remains stationary whilst the record sheet is moved in a direction perpendicular to the scanning direction.

Preferably, the scanned document data is corrected by an amount derived from a table of corrections in accordance with the said image error. Preferably, for each line of scanned document data in the direction perpendicular to the scanning direction, the number of errors is determined and the data is corrected by offsetting the pixels of scanned data in that direction.

The predetermined pattern may comprise a plurality of lines, each of which is printed on the record sheet by the print head which remains stationary whilst the record paper is moved in a direction perpendicular to the scanning direction.

The present invention also provides a shuttle scanning apparatus comprising control means and :
a print head operatively controlled by the control means to print a predetermined pattern on a record sheet;
a scanner operatively controlled by the control means to. scan the record sheet having the predetermined printed pattern
said control means being operative to:
   store the scanned data; and
   compare the stored data with pre-set reference data to determine any image errors;
   said scanner being further operatively controlled by the control means to scan a document and said control means being operative to correct the scanned document data by an amount corresponding to the said image errors and to store the corrected document data; said scanner characterised in that it further comprises:
      means for moving said record sheet in a direction perpendicular to the scanning direction during said printing whilst said print head remains stationary;

The control means may be adapted to correct the scanned document data by an amount derived from a ROM table of corrections in accordance with the said image error.

### BRIEF DESCRIPTION OF THE DRAWINGS

The present invention will now be described by way of example with reference to the accompanying drawings in which:
FIG. 1 shows the operation of a conventional shuttle scanner;
FIGs. 2A to 2C are schematic views of a shuttle scanner according to the present invention;

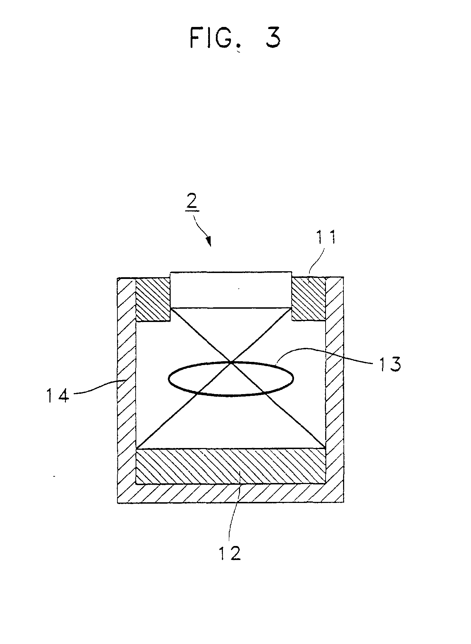

FIG. 3 is a detailed view of the scanning module in the shuttle scanner;
FIG. 4 is a block diagram of the shuttle scanner;
FIG. 5 is a flow chart showing the correction of image errors;
FIGs. 6A and 6B show a pattern printed on record paper;
FIGs. 7A to 7D show correction tables; and
FIG. 8 illustrates the rasterization of image data.

### DETAILED DESCRIPTION OF THE PREFERRED EMBODIMENT

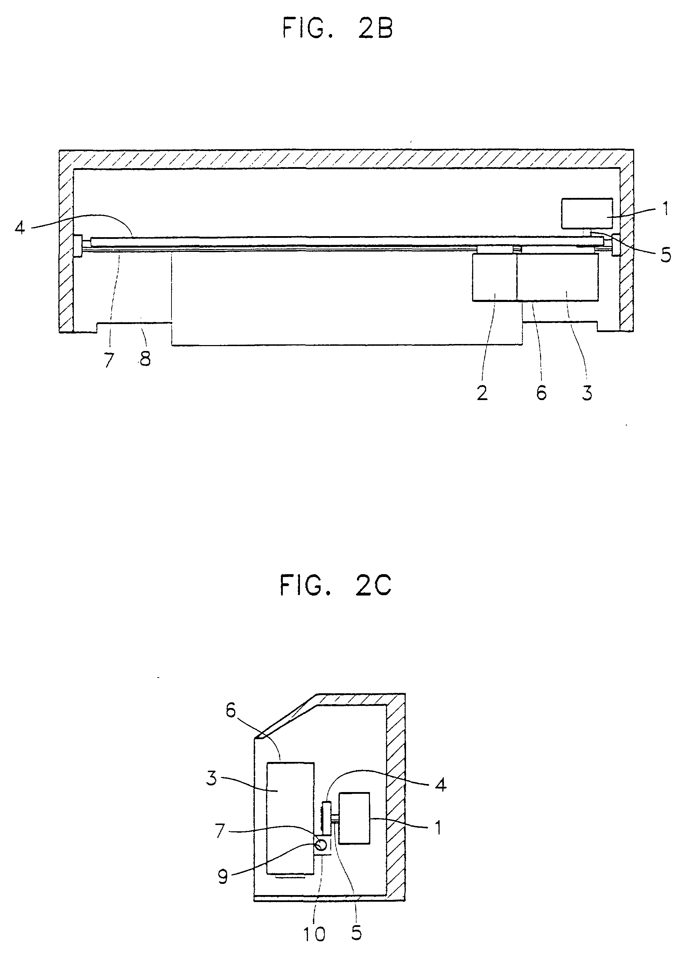

FIG. 2A is a front view of the shuttle scanner, FIG. 2B is a plan view and FIG. 2C is a side view. A carriage and return motor 1 is mounted at a position adjacent to the scanning and printing areas and drives a scanning module 2 that horizontally reciprocates while scanning image data recorded on a document and a printer head 3 that horizontally reciprocates while printing.

A conveying belt 4 is mounted on a motor axis 5 extending from the carriage and return motor 1 on a supporting body 6 which supports the printer head 3 and the scanning module 2 so as to convert rotational movement of the carriage and return motor 1 into linear movement. Thus, the supporting body 6 which supports the printer head 3 and the scanning module 2 can be horizontally reciprocated. A guide shaft 7 is normal to the direction of motion of a document and record paper and guides the supporting body 6 which supports the printer head 3 and the scanning module 2 during reciprocating of the supporting body 6 by means of the conveying belt 4. The supporting body 6 includes a supporting projection 10 in which a through hole 9 is formed so that the guide shaft 7 extends through the through hole 9. The supporting projection 10 is connected to the conveying belt 4 at one side. Accordingly, the supporting body 6 is reciprocated along the guide shaft 7 as the conveying belt 4 is driven.

The scanning module 2 is mounted on the supporting body 6 so as to be positioned at one side of the printer head 3 and is reciprocated together with the printer head 3 in a direction normal to the direction of motion of the document as the conveying belt 4 is driven. The scanning module 2 and the printer head 3 are mounted over a tray 8 on which the document and the record paper is moved. The scanning module 2 scans image data from the document while the document is conveyed whilst the surface of the document having image data on it is directed towards the scanning module 2. On the other hand, the printer head 3 prints image data on the record paper while the record paper is conveyed whilst a printing surface of the record paper is directed towards the printer head 3.

The shuttle scanning module 2 has an upper lamp 11. The lamp 11 emits light onto the surface of the document on which the image data are recorded. An image sensor 12 below the lamp 11 detects light reflected by the image data recorded on the document and converts the reflected light into an electric signal. A lens 13 between the lamp 11 and the image sensor 12 collects the reflected light and enables it to be received in the image sensor 12. The lamp 11, image sensor 12 and lens 13 are integrated and fixed by a scanning module casing 14.

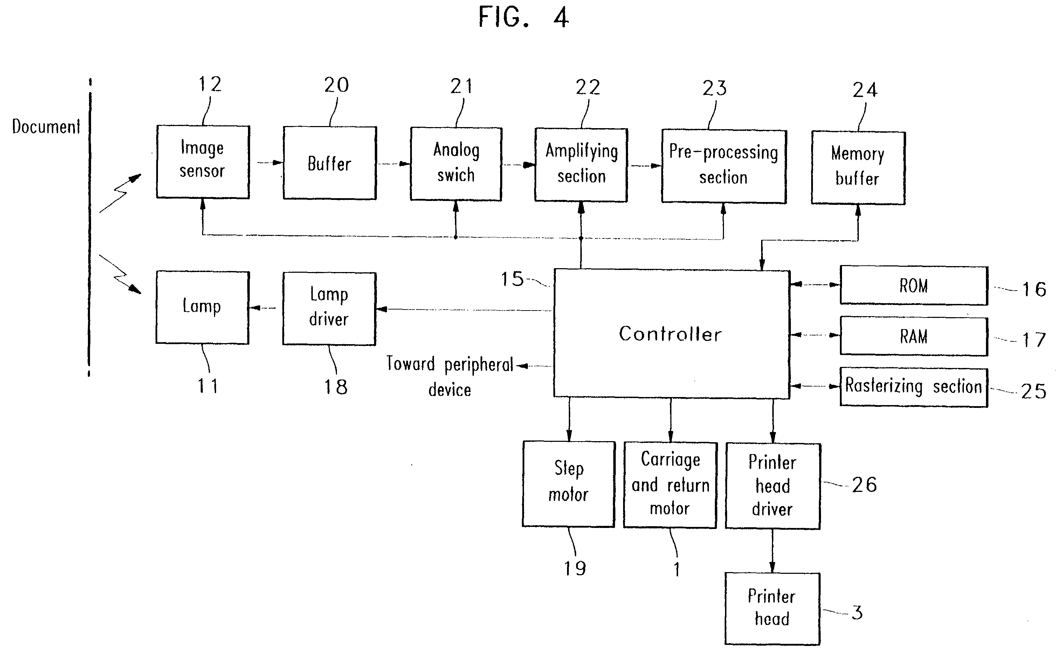

As shown in FIG. 4, a control section 15 controls the scanning module 2 to perform a series of scanning operation and controls the printer head 3. A ROM 16 includes a program which the control section 15 follows to control the scanning module 2 and the printer head 3. The ROM has a correction table and reference data corresponding to a predetermined pattern to assist in correcting errors in scanned image data. A RAM 17 stores temporary data, especially the scanned image data, generated while the control section 15 controls a system.

The lamp 11 emits light to illuminate the image on the document and the reflected light from the document is used to detect the image. A lamp driver 18 controls the illumination and extinguishing of the lamp 11 according to a control signal from the control section 15. The image sensor 12 photoelectrically converts the reflected light from the document into an analogue signal according to a control signal of the control section 15.

The carriage and return motor 1 reciprocates the scanning module 2 according to a control signal of the control section 15. A step motor moves the scanning module 2 in a sub-scanning direction so that the document is in proper correspondence according to a control signal of the control section 15.

A buffer 20 prevents the image signal from being distorted while processing the analogue image signal from the image sensor 12. An analogue switch 21 selects an amplification factor for the analogue image signal which is buffered by the buffer 20 according to a control signal of the control section 15. An amplifying section 22 receives the analogue image signal having a low voltage level from the buffer 20 and amplifies the analogue image signal by the amplification factor selected by the analogue switch 21. The analogue image signal may the n be processed by the next circuit, a pre-processing section 23.

The pre-processing section 23 receives the analogue image signal which is amplified by the amplifying section 22 and performs the process of correcting black and white. Furthermore, the pre-processing section 23 converts the analogue image signal into digital image data. A memory buffer 24 buffers the digital image signal output from the pre-processing section 23 and outputs the digital image signal to peripheral devices such as the RAM 17, a printer and a computer.

A rasterizer 25 reorganises the data that is divided in the sub-scanning direction to be divided in the main scanning direction so that it can be corrected.

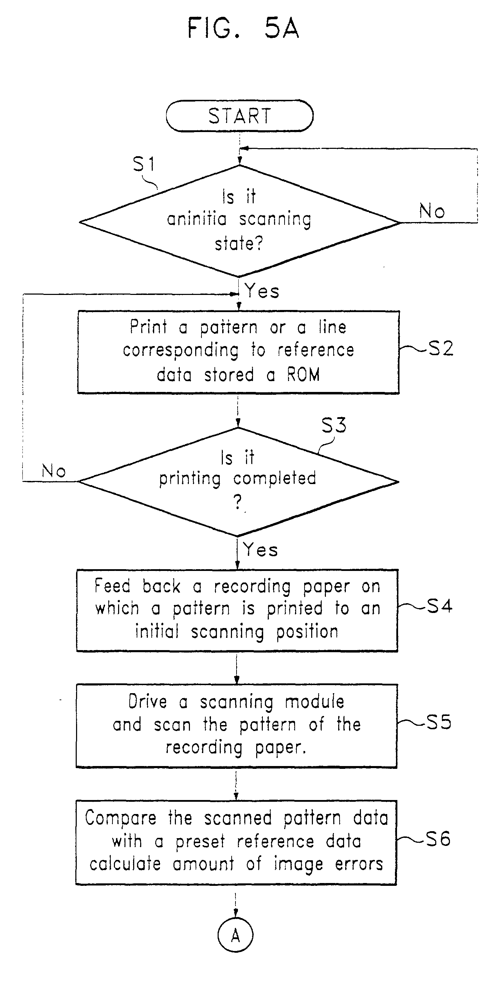

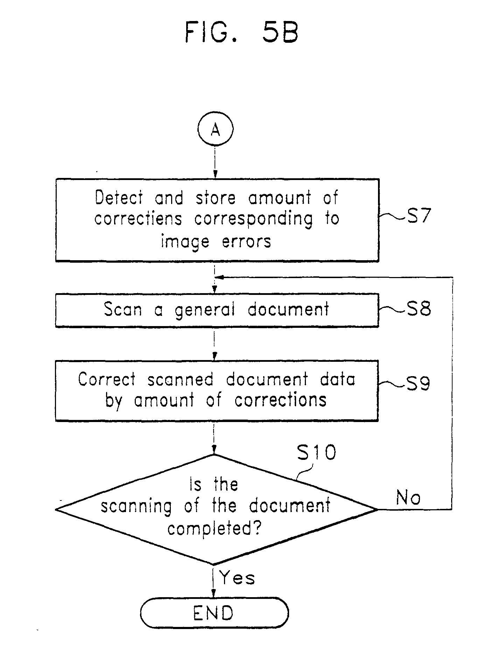

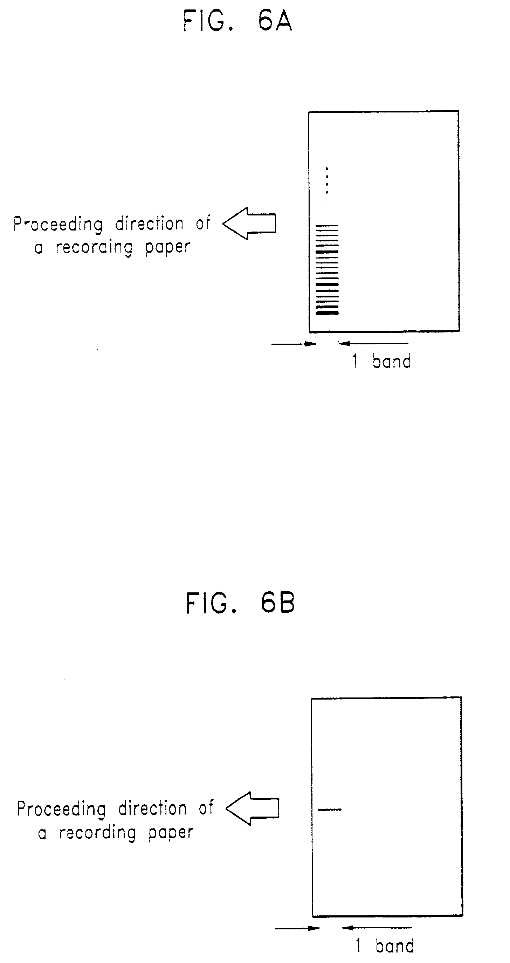

The process of correcting image errors according to the present invention will now be described with reference to FIGs. 5 to 8. When the scanning is started in step S1, the control section 15 drives the printer head 3 to print the pattern corresponding to the reference data stored in the ROM 16 step S2. After the printer head 3 is positioned in the desired position, only one of a number of nozzles is operated. When any one of these nozzles operates, step motor 19 conveys the record paper a predetermined distance. Thus, it is possible to obtain accurately aligned lines even though the printer head 3 and the scanning module 2 have an alignment tolerance. Furthermore, when one line is complete, the record paper is fed back to its initial position and the printer head 3 is moved to print the next line of the pattern on the record paper. The patterns are printed on the record paper as shown in FIG. 6A by repeating this process.

When the printing of the pattern is complete, in step S3, the record paper on which the pattern is printed is fed back to its initial position, in step S4. Then, the scanning module 2 is driven to scan the pattern which is printed on the record paper, in step S5. The control section 15 controls the lamp driver 18 to turn on the lamp 11 and the image sensor 12 receives reflected light through the lens 13. The image sensor 12 converts the reflected light into an electrical signal and outputs the electric signal toward the buffer 20. The buffer 20 buffers the electric signal output from the image sensor 12. The analogue switch 21 selects appropriate amplification for the electrical signal transmitted from the buffer 20 and controls the amplifying section 22. The amplifying section 22 amplifies the electric signal. The amplified signal is corrected by the pre-processing section 23 and is converted into digital pattern data. The pattern data is stored through the memory buffer 24 in the RAM 17.

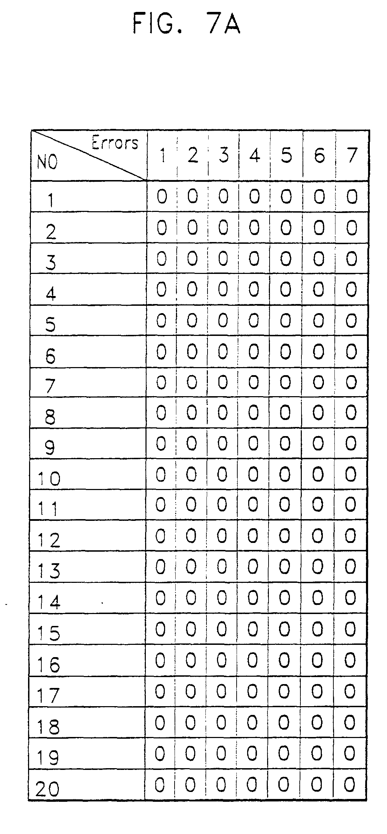

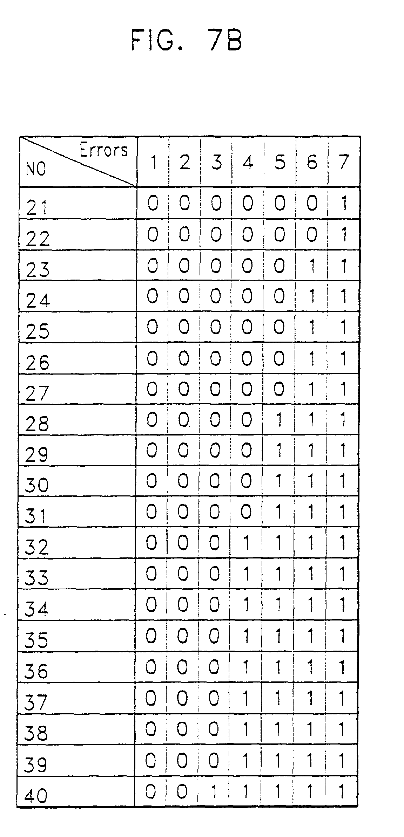

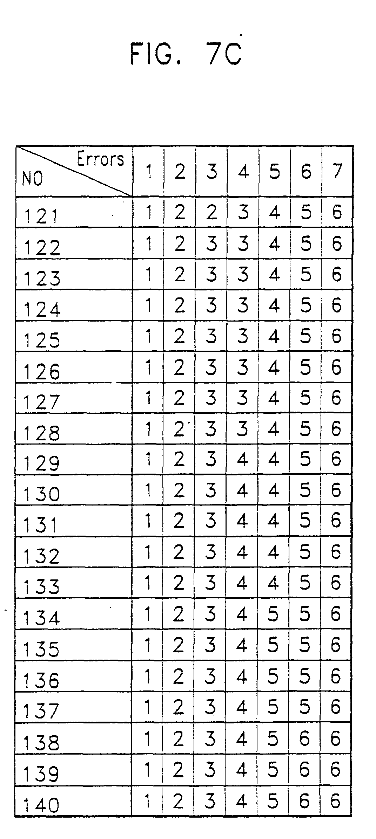

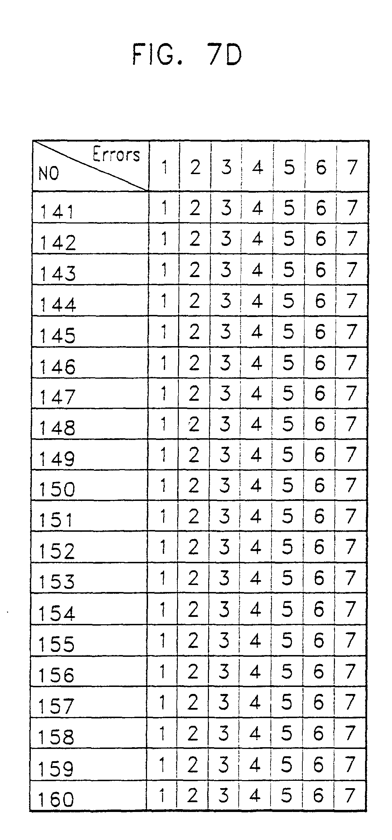

The control section 15 compares the pattern data stored in the RAM 17 with the reference data stored in the ROM 16 and calculates the image errors in the pattern data with respect to the reference data, in step S6. The amount of the corrections as shown in FIGs. 7A to 7D are detected by comparing the image errors with the correction table stored in the RAM 17, in step S7.

FIGs. 7A to 7D show the correction tables in a case of that seven degrees of errors are generated in the pattern data in the main scanning direction. Suppose that 160 dots are present in each line of a scanning band and a fourth degree of error occurs in the pattern data in the main scanning direction, the dots in a line of the scanning band, for example a 1^{st} dot to a 160^{th} dot, are offset by a respective number of dots corresponding to the fourth degree of error in the correction table. That is, if the fourth degree of error occurs in the pattern data, the 156^{th} is offset by four dots (taking the data value if the 160^{th} dot) in the sub-scanning direction and the 125^{th} dot is offset by three dots (taking the data of the 128^{th} dot) in the sub-scanning direction.

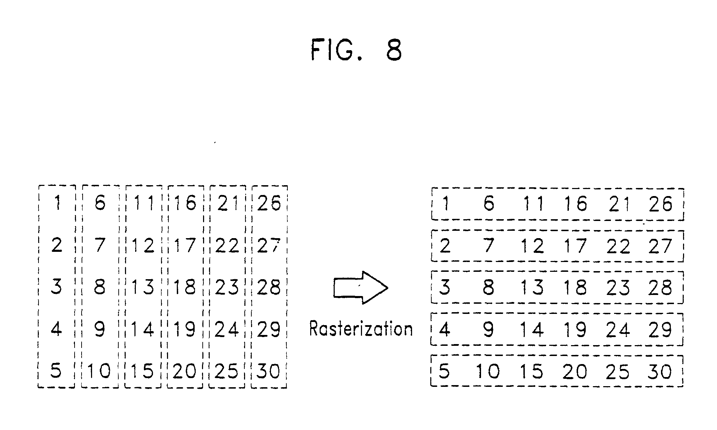

Then, a document selected by the user is scanned, in step S8. The scanned document data are corrected using the correction table stored in the RAM 17 as described above and processed, in step S9. Suppose that the number of dots per line of the scanning band were five as shown in FIG. 8 when scanning document data from the document, the document data 1, 2, 3, 4 and 5 in the sub-scanning direction are rasterized by the rasterizer 25 into document data 1, 6, 11, 16, 21, 26 in the main scanning direction. Such converted document data are corrected as described above.

If the fourth dot in the sub-scanning direction is corrected by three dots in the main scanning direction, for example, each rasterized document data on the fourth line in the sub-scanning direction is corrected by three dots in the main scanning direction.

The control section 15 checks whether the scanning is complete, in step S10. If the scanning is not complete, the control section 15 returns step S8 and repeatedly performs the steps following step S8. If the scanning is completed, the control section 15 finishes the process of correcting image errors.

Although, when scanning is begun, the pattern may be printed and the printed pattern scanned, alternatively the user can select the time for printing the pattern and scanning the printed pattern.

Since the correction of the image errors can be accomplished as described, the process of producing the scanner can be simplified. Accordingly, the productivity of the scanner can be improved.

## Claims

1. A method of correcting image errors in the output from a shuttle scanner comprising:
printing a predetermined pattern on a record sheet by a print head;
scanning the record sheet and storing the scanned data;
comparing the stored data with pre-set reference data to determine any image errors;
scanning a document and correcting the scanned document data by an amount corresponding to the said image errors and storing the corrected document data
**characterised in that** when printing said predetermined pattern said print head remains stationary whilst the record sheet is moved in a direction perpendicular to the scanning direction.

2. A method according to claim 1 in which the scanned document data is corrected by an amount derived from a table of corrections in accordance with the said image error.

3. A method according to claim 2 in which, for each line of scanned document data in the direction perpendicular to the scanning direction, the number of errors is determined and the data is corrected by offsetting the pixels of scanned data in that direction.

4. A method according to any preceding claim in which the predetermined pattern comprises a plurality of lines, each of which is printed on the record sheet by the print head which remains stationary whilst the record paper is moved in a direction perpendicular to the scanning direction.

5. A shuttle scanning apparatus comprising control means and:
a print head operatively controlled by the control means to print a predetermined pattern on a record sheet
a scanner operatively controlled by the control means to scan the record sheet having the predetermined printed pattern
said control means being operative to:
store the scanned data; and
compare the stored data with pre-set reference data to determine any image errors;
said scanner being further operatively controlled by the control means to scan a document and said control means being operative to correct the scanned document data by an amount corresponding to the said image errors and to store the corrected document data; said scanner **characterised in that** it further comprises
means for moving said record sheet in a direction perpendicular to the scanning direction during said printing whilst said print head remains stationary ;

6. Apparatus according to claim 5 in which the control means is adapted to correct the scanned document data by an amount derived from a ROM table of corrections in accordance with the said image error.

## Patentansprüche

1. Verfahren zum Korrigieren von Bildfehlern in der Ausgabe eines Pendelabtasters (Scanners), umfassend:
Drucken eines vorbestimmten Musters auf einen Aufzeichnungsbogen mittels eines Druckkopfes;
Scannen des Aufzeichnungsbogens und Speichern der gescannten Daten;
Vergleichen der gespeicherten Daten mit vorgegebenen Referenzdaten, um beliebige Bildfehler zu bestimmen;
Scannen eines Dokuments und Korrigieren der gescannten Dokumentendaten um einen Betrag, der mit den genannten Bildfehlern korrespondiert und Speichern der korrigierten Dokumentendaten,
**dadurch gekennzeichnet, daß** beim Drucken des genannten vorbestimmten Musters der genannte Druckkopf stationär bleibt, während der Aufzeichnungsbogen in einer Richtung senkrecht zur Scannrichtung bewegt wird.

2. Verfahren nach Anspruch 1, bei dem die gescannten Dokumentendaten um einen Betrag korrigiert werden, der von einer Korrekturtabelle gemäß dem genannten Bildfehler abgeleitet ist.

3. Verfahren nach Anspruch 2, bei dem für jede Linie der gescannten Dokumentendaten in der Richtung senkrecht zur Scannrichtung die Anzahl der Fehler bestimmt wird und die Daten durch Versetzen der Pixel der gescannten Daten in dieser Richtung korrigiert werden.

4. Verfahren nach einem der vorangehenden Ansprüche, bei dem das vorbestimmte Muster eine Mehrzahl von Linien aufweist, von denen jede auf den Aufzeichnungsbogen mittels des Druckkopfes gedruckt wird, der stationär bleibt, während das Aufzeichnungspapier in einer Richtung senkrecht zur Scannrichtung bewegt wird.

5. Pendelabtastvorrichtung (Scannvorrichtung), umfassend Steuermittel und:
einen Druckkopf, der wirksam durch das Steuermittel gesteuert wird, um ein vorbestimmtes Muster auf einen Aufzeichnungsbogen zu drucken;
einen Scanner, der durch das Steuermittel wirksam gesteuert wird, um den Aufzeichnungsbogen, der das vorbestimmte gedruckte Muster aufweist, zu scannen, bei dem das genannte Steuermittel geeignet ist:
die gescannten Daten zu speichern; und
die gespeicherten Daten mit vorgegebenen Referenzdaten zu vergleichen, um beliebige Bildfehler zu bestimmen;
bei dem der genannte Scanner ferner wirksam durch das Steuermittel gesteuert wird, um ein Dokument zu scannen, und das genannte Steuermittel dazu dient, die gescannten Dokumentendaten um einen Betrag zu korrigieren, der mit den genannten Bildfehlern korrespondiert, und die korrigierten Dokumentendaten zu speichern,
wobei der genannte Scanner **dadurch gekennzeichnet ist, daß** er ferner Mittel zur Bewegung des genannten Aufzeichnungsbogens während des genannten Druckens in einer Richtung senkrecht zur Scannrichtung aufweist, bei dem der genannte Druckkopf stationär bleibt.

6. Vorrichtung nach Anspruch 5, bei dem das Steuermittel geeignet ist, die gescannten Dokumentendaten um einen Betrag zu korrigieren, der von einer ROM-Korrekturtabelle gemäß dem genannten Bildfehler abgeleitet ist.

## Revendications

1. Méthode de correction d'erreurs d'image dans la sortie issue d'un balayeur à mouvement alternatif comprenant :
l'impression d'un modèle prédéterminé sur une feuille d'enregistrement par une tête d'impression,
le balayage de la feuille d'enregistrement et le stockage des données balayées ;
la comparaison des données enregistrées avec une donnée de référence pré-réglée pour déterminer toute erreur d'image ;
le balayage d'un document et la correction de la donnée du document balayé par une quantité correspondant aux dites erreurs d'image et l'enregistrement de la donnée du document corrigé,
**caractérisée en ce que**, lors de l'impression du modèle prédéterminé, ladite tête d'impression reste stationnaire tandis que la feuille d'enregistrement est déplacée dans une direction perpendiculaire à la direction de balayage.

2. Méthode selon la revendication 1 dans laquelle la donnée du document balayé est corrigée par une quantité dérivée d'une table de correction en accord avec ladite erreur d'image.

3. Méthode selon la revendication 2 dans laquelle, pour chaque ligne de donnée du document balayé dans la direction perpendiculaire à la direction de balayage, le nombre d'erreurs est déterminé et la donnée est corrigée en déplaçant les pixels de la donnée balayée dans cette direction.

4. Méthode selon l'une des revendications précédentes, dans laquelle le modèle prédéterminé comprend une pluralité de lignes, chacune d'entre elles est imprimée sur la feuille d'enregistrement par la tête d'impression qui reste stationnaire tandis que la feuille d'enregistrement est déplacée dans une direction perpendiculaire à la direction de balayage.

5. Dispositif de balayage à mouvement alternatif comprenant des moyens de contrôle et :
une tête d'impression fonctionnellement contrôlée par des moyens de contrôle pour imprimer un modèle prédéterminé sur une feuille d'enregistrement,
un balayeur fonctionnellement contrôlé par les moyens de contrôle pour balayer la feuille d'enregistrement ayant le modèle prédéterminé imprimé,
lesdits moyens de contrôle étant fonctionnels pour :
enregistrer la donnée balayée et,
comparer la donnée enregistrée avec la donnée de référence pré-réglée pour déterminer toute erreur d'image ;
Ledit balayeur étant de plus fonctionnellement contrôlé par les moyens de contrôle pour balayer un document et lesdits moyens de contrôle étant fonctionnels pour corriger la donnée du document balayé par une quantité correspondant aux dites erreurs d'image et pour enregistrer la donnée du document corrigé ; ledit balayeur étant **caractérisé en ce qu'**il comprend de plus :
des moyens pour déplacer ladite feuille d'enregistrement dans une direction perpendiculaire à la direction de balayage durant ladite impression tandis que la tête d'impression reste stationnaire.

6. Dispositif selon la revendication 5, dans lequel les moyens de contrôle sont adaptés pour corriger la donnée du document balayé par une quantité dérivée d'une table à mémoire morte de corrections en accord avec ladite erreur d'image.
